# EUROPÄISCHE PATENTSCHRIFT

(11) **EP 1 378 723 B1**
(45) Veröffentlichungstag und Bekanntmachung des Hinweises auf die Patenterteilung: **20.07.2005**
(21) Anmeldenummer: 03007656.6
(22) Anmeldetag: 03.04.2003
(51) Int. Cl.: G01C 21/36

(54) **Fahrerinformationsvorrichtung**
Driver information system
Système d'information pour conducteurs

(30) Priorität: 06.07.2002 DE 10230479
(43) Veröffentlichungstag der Anmeldung: 07.01.2004
(73) Patentinhaber: ROBERT BOSCH GMBH, 70442 Stuttgart (DE)
(72) Erfinder: Listle, Holger, 31195 Lamspringe (DE); Barkowski, Andre, 38228 Salzgitter (DE)

(56) Entgegenhaltungen:
- EP-A- 0 829 704
- EP-A- 0 833 291
- DE-A- 4 219 326
- US-A1- 2002 130 906
- PATENT ABSTRACTS OF JAPAN vol. 2002, no. 03, 3. April 2002 (2002-04-03) & JP 2001 317955 A (EQUOS RESEARCH CO LTD), 16. November 2001 (2001-11-16)

## Beschreibung

### Stand der Technik

Die Erfindung geht aus von einer Fahrerinformationsvorrichtung nach der Gattung des Hauptanspruchs. Aus der DE 199 56 112 A1 ist bereits eine Fahrerinformationsvorrichtung in Form eines Navigationssystems bekannt, bei dem eine vereinfachte Auswahl von interessierenden Objekten mittels einer Auswahlliste erfolgt. Hierzu ist vorgesehen, eine Landkarte und die Auswahlliste gleichzeitig auf der Ausgabeeinheit darzustellen. Symbole für die in der Liste dargestellten und beschriebenen Objekte werden in die Karte eingeblendet. Hierbei muss jedoch ein Betrachter die Zuordnung zwischen einem eingeblendeten Objekt und einem Listeneintrag selbst vornehmen. Ferner ist es auch bekannt (z.B. aus EP 0829704 oder JP 20001317955), Symbole unmittelbar an dem Ort des dem Symbol zugeordneten Objektes in eine Karte einzublenden. Insbesondere in dicht bebauten Gebieten bzw. bei einer niedrigen Auflösung überschneiden sich jedoch diese Symbole oder überdecken sich im schlimmsten Fall völlig, so dass ein Benutzer das entsprechende Symbol bei einem Betrachten der Karte nicht wahrnehmen kann. Hierdurch übersieht er möglicherweise wichtige Objekte. Zudem wird die Auswahl eines Objektes, das eng neben anderen Objekten liegt, durch ein Aneinandergrenzen, Überschneiden oder Überdecken der Symbole erschwert, die zum Beispiel mittels eines Fadenkreuzes, mittels einer Berührung einer Touchscreen-Oberfläche oder mittels einer Bildschirmmarke erfolgen kann.

### Vorteile der Erfindung

Die erfindungsgemäße Fahrerinformationsvorrichtung mit den Merkmalen des Hauptanspruchs hat demgegenüber den Vorteil, dass an der Stelle von mehreren Objekten an einem Ort in der Karte diese Symbole nicht selbst an dieser Stelle dargestellt werden, sondern lediglich die Darstellung eines gemeinsamen Hinweissymbols erfolgt. Durch die Auswahl dieses Hinweissymboles kann der Benutzer Symbole und bevorzugt auch eine Beschreibung der besonderen Objekte in einem Auswahlmenü zur Anzeige bringen. Hierdurch werden dem Benutzer gut lesbare Informationen zu den mehreren besonderen Objekten gegeben, wobei das Hinweissymbol vorzugsweise an der Stelle in die Karte eingeblendet wird, an der sich die besonderen Objekte tatsächlich oder die in einer Umgebung der besonderen Objekte liegt. Dies ist insbesondere auch dann der Fall, wenn sich Symbole von mehreren Objekten an einer Stelle überschneiden würden, so dass sie sich zumindest teilweise oder sogar vollständig verdecken, selbst wenn die zugehörigen besonderen Objekte nur sehr nahe beieinander liegen, sich jedoch nicht an dem gleichen Ort befinden.

Durch die in den Unteransprüchen aufgeführten Maßnahmen sind vorteilhafte Weiterbildungen und Verbesserungen der im Hauptanspruch angegebenen Fahrerinformationsvorrichtung möglich. Besonders vorteilhaft ist, das vorzugsweise als eine Liste ausgeführte Auswahlmenü in die Karte einzublenden, insbesondere mittels eines halbtransparenten Fensters, so dass die Karte im Wesentlichen weiter für einen Benutzer sichtbar bleibt. Ferner wird die Zuordnung von Objekten dadurch erleichtert, dass das Hinweissymbol weiterhin an unveränderter Stelle auch nach seiner Auswahl angezeigt wird, während es entweder unmittelbar mit dem Auswahlmenü verbunden oder in dieses eingebettet wird.

Ferner ist vorteilhaft, über eine Auswahl eines der besonderen Objekte diese entweder als ein Fahrziel in die Fahrerinformationsvorrichtung einzugeben oder weitere Informationen mittels einer Auswahl zur Anzeige zu bringen. Hierdurch wird einerseits die Fahrzieleingabe und andererseits die Informationsauswahl vereinfacht.

Es ist ferner vorteilhaft, über die Farbe des Hinweissymbols auf die Art zumindest eines der an diesem Ort befindlichen besonderen Objekte zu schließen. So kann zum Beispiel durch eine Einfärbung auf Krankenhäuser, auf Restaurants oder auf Hotels gesondert hingewiesen werden. Hierbei ist eine Priorisierung einzelner Einrichtungen möglich, um festzulegen, welche Farbe erscheint, wenn mehrere Objekte, denen eine solche besondere Farbe zugeordnet ist, sich an der angezeigten Stelle bzw. in einem vorgegebenen Umkreis dieser Stelle befinden.

### Zeichnung

Ausführungsbeispiele der Erfindung sind in der Zeichnung dargestellt und in der nachfolgenden Beschreibung näher erläutert.

Es zeigen
- Figur 1: eine erfindungsgemäße Fahrerinformationsvorrichtung,
- Figur 2: eine Anzeigendarstellung in einer erfindungsgemäßen Fahrerinformationsvorrichtung nach einer Auswahl des Hinweissymbols.

### Beschreibung des Ausführungsbeispiels

Die erfindungsgemäße Fahrerinformationsvorrichtung kann für beliebige Fahrzeuge verwendet werden. Ferner kann sie auch fahrzeugunabhängig an einer Recheneinheit installiert werden. Im Folgenden wird die erfindungsgemäße Fahrerinformationsvorrichtung am Beispiel einer Fahrerinformationsvorrichtung beschrieben, die als eine Navigationsvorrichtung ausgeführt ist und in ein Kraftfahrzeug eingebaut ist. Bei Kraftfahrzeugen steht im Allgemeinen nur eine kleine Bildschirmfläche zur Verfügung, so dass durch das erfindungsgemäße Verfahren diese begrenzte Bildschirmfläche optimal ausgenutzt werden kann.

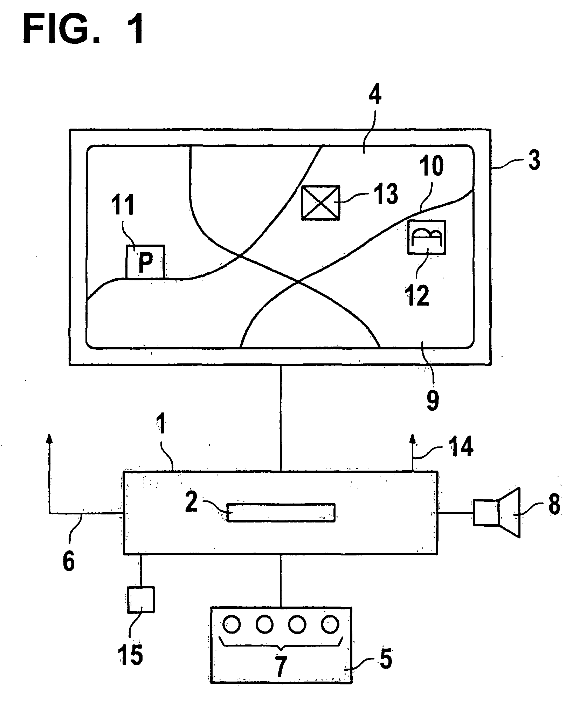

In der Figur 1 ist eine Navigationsvorrichtung 1 mit einer Recheneinheit 2 dargestellt, an die eine Anzeigeeinheit 3 mit einer Bildschirmfläche 4 angeschlossen ist. Die Navigationsvorrichtung 1 weist eine Ortungsvorrichtung 6 auf, die vorzugsweise über ein Satellitenortungssystem, z.B. GPS (Global Positioning System), eine aktuelle Fahrzeugposition bestimmt. Über an einer Bedieneinheit 5 angeordnete Bedienelemente 7, die zum Beispiel als Drucktasten, als eine Wippe oder als ein Drehgeber ausgeführt sind, kann in die Navigationsvorrichtung 1 ein Fahrziel eingegeben werden. Die Recheneinheit 2 bestimmt von der über die Ortungsvorrichtung 6 bestimmten aktuellen Fahrzeugposition eine Fahrtroute zu dem eingegebenen Fahrziel. Über einen Lautsprecher 8 werden Fahrhinweise an einen Fahrer ausgegeben. Ferner können auch Fahrhinweise in der Bildschirmfläche 4 angezeigt werden. Ferner weist die Navigationsvorrichtung 1 einen Datenspeicher 15 auf, in dem eine Kartendarstellung gespeichert ist, die in der Bildschirmfläche 4 zur Anzeige gelangt. In dem Datenspeicher 15 sind zudem auch die Informationen zu den besonderen Objekten, sowie die Symbole und Bezeichnungen dieser Objekte in Grafik- und/oder Textform gespeichert.

In der Bildschirmfläche 4 ist auch eine Kartendarstellung 9 zur Orientierung des Fahrers und insbesondere zur Fahrzieleingabe dargestellt. Der dargestellte Kartenausschnitt kann entweder über die Bedienelemente 7 gewählt werden oder wird von der Recheneinheit 2 in Abhängigkeit von der über die Ortungsvorrichtung 6 ermittelten aktuellen Fahrzeugposition automatisch bestimmt. In der Kartendarstellung 9 sind Straßen 10 eingetragen. Ferner sind mehrere Symbole in die Karte eingetragen, die den Fahrer über besondere Objekte, so genannte POI (Points of Interest) informieren, wobei die entsprechenden Symbole an der Position des jeweiligen besonderen Objektes in der Kartendarstellung dargestellt sind. Die besonderen Objekte sind zum Beispiel Sehenswürdigkeiten, Restaurants, Hotels, Behörden, Tankstellen, Rastanlagen oder Parkplätze. Bei dem dargestellten Ausführungsbeispiel ist ein Parkplatzsymbol 11 an einer Straße dargestellt. An einer anderen Stelle der Kartendarstellung 9 ist ein Bett als ein Hotelsymbol 12 dargestellt. Ferner ist in der Karte ein Hinweissymbol 13 eingetragen, das einen Benutzer darauf hinweist, dass sich an der Stelle des Hinweissymboles 13 eine Vielzahl von besonderen Objekten befindet. Für eine Fahrzieleingabe kann eines der Symbole 11, 12, 13 ausgewählt werden. Die Auswahl erfolgt über die Bedienelemente 7. In einer besonderen Ausführungsform kann die Bildschirmfläche 4 auch als eine berührungsempfindliche Bildschirmoberfläche ausgeführt sein, so dass durch eine Berührung der Bildschirmfläche 4 an einer Stelle der Symbole 11, 12, 13 dieses Symbol ebenfalls ausgewählt wird. Je nach Ausführung bzw. Einstellung der Navigationsvorrichtung 1 kann das ausgewählte Symbol eine Eingabe des zugehörigen Ortes als ein Fahrziel in die Navigationsvorrichtung zur Folge haben. In einer anderen Ausführungsform kann durch eine Auswahl auch zunächst eine weitere Ausgabe von Informationen zu dem besonderen Objekt ausgegeben werden. Zum Beispiel können zusammen mit dem Hotelsymbol 12 der Belegungszustand, die Kategorie oder der Preis des Hotels ausgegeben werden. In einer bevorzugten Ausführungsform weist hierzu die Navigationsvorrichtung 1 eine Mobilfunkschnittstelle 14 auf, über die weitere Informationen abgerufen werden können.

Um auf besondere Einrichtungen aufmerksam zu machen, kann das Hinweissymbol 13 zum Beispiel rot eingefärbt werden, wenn sich an dieser Stelle ein Krankenhaus befindet, blau eingefärbt werden, wenn sich an dieser Stelle ein Hotel, jedoch kein Krankenhaus befindet und grün eingefärbt werden, wenn sich an dieser Stelle ein Restaurant, jedoch weder ein Hotel noch ein Krankenhaus befindet.

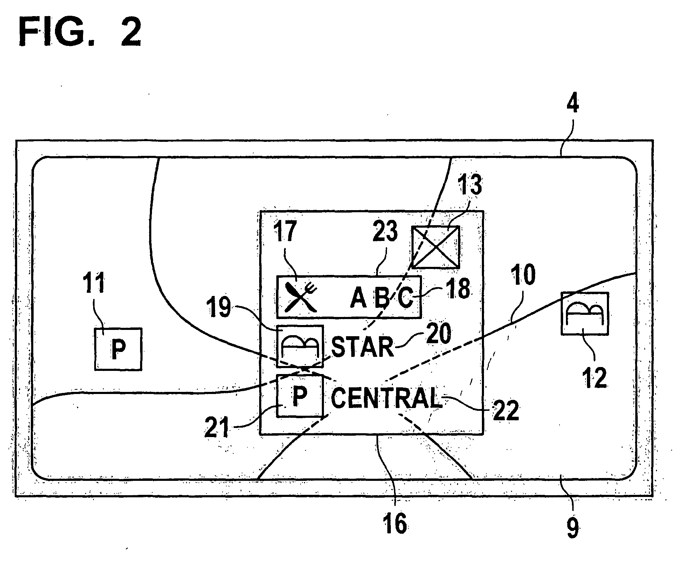

Wird das Hinweissymbol 13 ausgewählt, so wird dieser Ort zunächst noch nicht als ein Fahrziel erfasst, sondern es erfolgt eine Darstellung eines Auswahlmenüs mit weiteren Informationen, hier in Form einer Liste, wie sie in der Figur 2 dargestellt ist. Die Informationen werden bevorzugt als Symbole und/oder als Texte angezeigt. In einer anderen Ausführungsform ist z.B. auch die Auswahl aus einem zweidimensionalen Auswahlfeld oder eine Baumstruktur zur Auswahl möglich. Das Hinweissymbol 13 wird unverändert an gleicher Stelle in der Karte dargestellt. Über die Kartendarstellung 9 wird in einer Umgebung des Hinweissymbols 13 ein halbtransparentes Fenster 16 mit einem Auswahlmenü gelegt, wobei in dem Bereich des Fensters 16 z.B. ein Grauton über die Karte gelegt wird, so dass in abgeschwächter Weise die darunter befindliche Kartendarstellung erkennbar bleibt, während eingeblendete Informationen zu den besonderen Objekten gegenüber der Karte hervorgehoben werden. Entsprechend sind in der Figur 2 die unter dem Fenster 16 verlaufenden Straßen gestrichelt dargestellt. Das Hinweissymbol 13 wird in das halbtransparente Fenster 16 eingebettet. In dem halbtransparenten Fenster 16 wird ein Restaurantsymbol 17 mit einem Erläuterungstext 18 eingeblendet. Ferner wird ein Hotelsymbol 19 mit einem Erläuterungstext 20 z.B. in Form des Hotelnamens eingeblendet. Zudem wird ein Parkplatzsymbol 21 ebenfalls mit einem Erläuterungstext 22 zu dem Parkplatz eingeblendet. Bei der dargestellten Ausführungsform ist ein Auswahlrahmen 23 in dem Auswahlmenü um das Restaurantsymbol 17 mit dem Erläuterungstext 18, z.B. einer Restaurantbezeichnung, herum angeordnet. Über die Bedienelemente 7 oder eine Berührung der Bildschirmfläche 4 kann der Auswahlrahmen 23 zu den anderen angezeigten besonderen Objekten, hier also zu dem Hotel oder dem Parkplatz, verschoben werden. Diese können einerseits als Fahrziel ausgewählt werden, andererseits können weitere Informationen zu diesen besonderen Objekten angefordert werden, die entweder ebenfalls in die Kartendarstellung 9 eingeblendet werden oder die Kartendarstellung 9 ersetzen. Bei der hier dargestellten Form der Listendarstellung werden sowohl Symbole, als auch erläuternde Hinweistexte in das halbtransparente Fenster 16 eingeblendet. Statt dessen ist es in einem nicht in der Zeichnung dargestellten Ausführungsbeispiele auch möglich, statt dessen für ein Objekt nur eine Symboldarstellung oder eine Textinformation in das halbtransparente Fenster 16 einzublenden. In einer ebenfalls nicht dargestellten Ausführungsform kann das halbtransparente Fenster auch mit einem die Kartendarstellung 9 vollständig überdeckenden Hintergrund ausgefüllt werden. Weitere Informationen, zum Beispiel Straßennamen oder Ortsbezeichnungen können zudem unmittelbar in die Kartendarstellung 9 eingetragen werden. In einem weiteren Ausführungsbeispiel ist es auch möglich, bei einer ersten Auswahl des Hinweissymbols 13 nur die entsprechenden Symbole 17, 19, 21 und bei einer erneuten Auswahl des Hinweissymbols 13 zusätzlich auch die Textinformationen 18, 20, 22 in die Kartendarstellung 9 einzublenden.

## Patentansprüche

1. Fahrerinformationsvorrichtung mit einer Kartendarstellung, wobei besondere Objekte durch Symbole in der Karte **gekennzeichnet sind, dadurch gekennzeichnet, dass** mehreren besonderen Objekten an einem Ort oder in einer vorgebbaren Umgebung eines Ortes ein gemeinsames Hinweissymbol (13) in der Kartendarstellung (9) zugeordnet ist und dass bei einer Auswahl des Hinweissymbols (13) ein Auswahlmenü (16), vorzugsweise eine Liste, mit Informationen zu den einzelnen besonderen Objekten anzeigbar ist.

2. Fahrerinformationsvorrichtung nach Anspruch 1, **dadurch gekennzeichnet, dass** das Hinweissymbol (13) an der Stelle der besonderen Objekte oder innerhalb der vorgegebenen Umgebung in der Kartendarstellung (9) dargestellt ist.

3. Fahrerinformationsvorrichtung nach einem der vorherigen Ansprüche, **dadurch gekennzeichnet, dass** das Auswahlmenü (16) in die Kartendarstellung (9) eingeblendet ist.

4. Fahrerinformationsvorrichtung nach Anspruch 3, **dadurch gekennzeichnet, dass** das Auswahlmenü (16) in einem halbtransparent dargestellten Fenster über die Kartendarstellung (9) gelegt ist.

5. Fahrerinformationsvorrichtung nach einem der vorherigen Ansprüche, **dadurch gekennzeichnet, dass** eine Umgebung der besonderen Objekte zur Darstellung eines gemeinsamen Hinweissymbols (13) derart gewählt ist, dass anstelle einzelner Symbole das Hinweissymbol (13) angezeigt wird, wenn sich Symbole bei einer jeweils einzelnen Darstellung der Symbole in der Kartendarstellung (9) überschneiden.

6. Fahrerinformationsvorrichtung nach einem der vorherigen Ansprüche, **dadurch gekennzeichnet, dass** bei einer Anzeige des Auswahlmenüs das Hinweissymbol (13) an unveränderter Stelle in der Karte mit einer Verbindung zu dem Auswahlmenü (16) oder eingebettet in das Auswahlmenü anzeigbar ist.

7. Fahrerinformationsvorrichtung nach einem der vorherigen Ansprüche, **dadurch gekennzeichnet, dass** Symbole und/oder Textinformationen zu den besonderen Objekten in dem Auswahlmenü anzeigbar sind.

8. Fahrerinformationsvorrichtung nach einem der vorherigen Ansprüche, **dadurch gekennzeichnet, dass** eines der besonderen Objekte in dem Auswahlmenü (16) als ein Fahrziel für eine Routenberechnung auswählbar ist.

9. Fahrerinformationsvorrichtung nach einem der vorherigen Ansprüche, **dadurch gekennzeichnet, dass** mittels einer Auswahl eines der besonderen Objekte in dem Auswahlmenü (16) weitere Informationen zu dem besonderen Objekt abrufbar sind.

10. Fahrerinformationsvorrichtung nach einem der vorherigen Ansprüche, **dadurch gekennzeichnet, dass** eine Farbe des Hinweissymbols (13) in Abhängigkeit von der Art und/oder der Anzahl der besonderen Objekte gewählt ist.

11. Fahrerinformationsvorrichtung nach einem der vorherigen Ansprüche, **dadurch gekennzeichnet, dass** die besonderen Objekte Parkplätze, Restaurants, Hotels und/oder Sehenswürdigkeiten sind.

## Claims

1. Driver information device having a map representation, wherein particular objects are **characterized by** symbols on the map, **characterized in that** a plurality of particular objects at a location or in a predefinable area surrounding a location are assigned a common indication symbol (13) in the map representation (9), and **in that** when the indication symbol (13) is selected, a selection menu (16), preferably a list, with information on the individual particular objects can be displayed.

2. Driver information device according to Claim 1, **characterized in that** the indication symbol (13) is represented at the location of the particular objects or within the predefined surrounding area in the map representation (9).

3. Driver information device according to one of the preceding claims, **characterized in that** the selection menu (16) is included in the map representation (9).

4. Driver information device according to Claim 3, **characterized in that** the selection menu (16) is positioned in a window which is represented in a semi-transparent fashion above the map representation (9).

5. Driver information device according to one of the preceding claims, **characterized in that** an area surrounding the particular objects is selected in order to represent a common indication symbol (13) in such a way that instead of individual symbols the indication symbol (13) is displayed if symbols in a respective individual representation of the symbols in the map representation (9) overlap.

6. Driver information device according to one of the preceding claims, **characterized in that** when the selection menu is displayed the indication symbol (13) can be displayed at an unchanged position on the map with a connection to the selection menu (16) or embedded in the selection menu.

7. Driver information device according to one of the preceding claims, **characterized in that** symbols and/or text information relating to the particular objects can be displayed in the selection menu.

8. Driver information device according to one of the preceding claims, **characterized in that** one of the particular objects in the selection menu (16) can be selected as a destination for a route calculation.

9. Driver information device according to one of the preceding claims, **characterized in that** further information relating to the particular object can be called by means of a selection of one of the particular objects in the selection menu (16).

10. Driver information device according to one of the preceding claims, **characterized in that** a colour of the indication symbol (13) is selected as a function of the type and/or the number of particular objects.

11. Driver information device according to one of the preceding claims, **characterized in that** the particular objects are car parks, restaurants, hotels and/or sights.

## Revendications

1. Dispositif d'information pour conducteurs comprenant une représentation cartographique, selon lequel des objets particuliers sont **caractérisés** sur la carte par des symboles,
**caractérisé en ce qu'**
un symbole d'indication (13) commun dans la représentation cartographique (9) est associé à plusieurs objets particuliers d'un lieu ou dans un environnement prédéterminé d'un lieu et la sélection du symbole d'indication (13) permet d'afficher un menu sélection (16), de préférence une liste, comportant des informations relatives à chaque objet particulier.

2. Dispositif d'information pour conducteurs selon la revendication 1,
**caractérisé en ce que**
le symbole d'indication (13) est représenté dans la représentation cartographique (9) à l'emplacement des objets particuliers ou à l'intérieur de l'environnement prédéterminé.

3. Dispositif d'information pour conducteurs selon l'une des revendications précédentes,
**caractérisé en ce que**
le menu sélection (16) est fondu dans la représentation cartographique (9).

4. Dispositif d'information pour conducteurs selon la revendication 3,
**caractérisé en ce que**
le menu sélection (16) est placé dans une fenêtre semi-transparente sur la représentation cartographique (9).

5. Dispositif d'information pour conducteurs selon l'une des revendications précédentes,
**caractérisé en ce qu'**
un environnement des objets particuliers est choisi pour représenter un symbole d'indication commun (13) de telle sorte que le symbole d'indication (13) est affiché à la place de symboles individuels lorsque les symboles se chevauchent dans la représentation cartographique (9) dans le cas où ces symboles sont représentés à chaque fois individuellement.

6. Dispositif d'information pour conducteurs selon l'une des revendications précédentes,
**caractérisé en ce que**
lorsque le menu sélection s'affiche, le symbole d'indication (13) peut être affiché en un emplacement conforme sur la carte avec une liaison au menu sélection (16) ou être intégré dans le menu sélection.

7. Dispositif d'information pour conducteurs selon l'une des revendications précédentes,
**caractérisé en ce que**
des symboles et/ou des informations sous forme de texte relatives aux objets particuliers peuvent être affichées dans le menu sélection.

8. Dispositif d'information pour conducteurs selon l'une des revendications précédentes,
**caractérisé en ce que**
l'un des objets particuliers peut être sélectionné dans le menu sélection (16) comme un lieu de destination pour un calcul d'itinéraires routiers.

9. Dispositif d'information pour conducteurs selon l'une des revendications précédentes,
**caractérisé en ce qu'**
une sélection d'un des objets particuliers dans le menu sélection (16) permet d'obtenir d'autres informations relatives à l'objet particulier.

10. Dispositif d'information pour conducteurs selon l'une des revendications précédentes,
**caractérisé en ce qu'**
on choisit une couleur du symbole d'indication (13) en fonction du type et/ou du nombre d'objets particuliers.

11. Dispositif d'information pour conducteurs selon l'une des revendications précédentes,
**caractérisé en ce que**
les objets particuliers sont des emplacements de stationnement, des restaurants, des hôtels et/ou des curiosités touristiques.
